# EUROPEAN PATENT SPECIFICATION

(11) **EP 2 348 876 B1**
(45) Date of publication and mention of the grant of the patent: **10.07.2013**
(21) Application number: 08878076.2
(22) Date of filing: 17.11.2008
(51) Int. Cl.: A23G 3/54, A23G 3/36, A23G 3/00, A23G 3/40

(54) **CENTER-FILLED CONFECTION AND METHOD**
MITTIG GEFÜLLTES KONFEKT UND VERFAHREN
CONFISERIE FOURRÉE ET PROCÉDÉ

(43) Date of publication of application: 03.08.2011
(73) Proprietor: Cadbury India Ltd., Maharashtra (IN); Cadbury Food Co Ltd., Beijing 100076 (CN); Cadbury Enterprises PTE Limited, Jurong 619528 (SG)
(72) Inventor: BHATTACHARYA, Kalisadhan, Thane 400 610 (IN); CHHAYA, Prashant Sanatkumar, Singapore 248727 (SG); DU, Chunli, Beijing 100076 (CN); ONG, Mei Horng, Beijing 100020 (CN); PUGSLEY, Nicole Ming-Hooi, Brighton Victoria 3186 (AU); SAMANT, Shantanu Krishnarao, Navi Mumbai (IN); TEE, Hui Chin, Singapore 760804 (SG); WONG, Chui Hoon (Rebecca), Singapore 517747 (SG); WRIGHT, Brendon John, Singapore 558391 (SG)
(74) Representative: Wilson Gunn
(86) International application number: PCT/CN2008/073084
(87) International publication number: WO 2010/054516

(56) References cited:
- EP-A2- 0 297 720
- WO-A1-2008/079927
- WO-A2-2008/061188
- CN-A- 1 642 436
- CN-A- 101 179 943
- US-A- 5 362 508
- US-A1- 2005 084 603

## Description

### BACKGROUND

Confections combining a shell and a fat-containing center filling are known and commercially available. For example, Cadbury CHOCLAIR confections, Perfetti ALPENLIEBE confections, and Werther's ORIGINAL ECLAIR confections each combine a hard or chewy caramel shell with a solid chocolate center. In order to provide a more indulgent consumer experience, the present inventors have conducted research with the goal of providing a confection with a shell and a liquid fat-containing center. However, it has been difficult to create such a confection because liquid fat-containing center compositions that were shelf-stable in isolation exhibited an undesirable hardening over time when surrounded by a shell, as, for example, when a chewy caramel shell was used. There is therefore a need for a shelf-stable confection with a liquid fat-containing center fill.
WO 2008/079927 relates to center-filled confectionery products and discloses a hard confectionery shell surrounding a filling, the hard confectionery shell comprising a plurality of segments having different colours, wherein the filling is selected from the group consisting of a liquid, a paste, a powder, a hard confectionery and combinations thereof.

### BRIEF DESCRIPTION

One or more of the above-described and other drawbacks are alleviated by a center-filled confection, comprising: a center comprising a center composition; and a shell comprising a shell composition comprising less than or equal to 20 weight percent total fat, based on the total weight of the shell composition; wherein the shell contacts and substantially surrounds the center; wherein the center composition comprises a bulk sweetener, and a fat having a slip melting point of 10 to 18°C, and wherein the center composition has a Brookfield viscosity of 4,000 to 12,000 millipascal-seconds measured at 40°C and 50 rotations per minute using HA/HB spindle 5.

Another embodiment is a method of making a center-filled confection, comprising: extruding a center-filled rope comprising a shell comprising a shell composition and a center comprising a center composition; and forming individual pieces from the center-filled rope; wherein, in the individual pieces, the shell contacts and substantially surrounds the center; wherein the center composition comprises a bulk sweetener, and a fat having a slip melting point of 10 to 18°C, and wherein the center composition has a Brookfield viscosity of 4,000 to 12,000 millipascal-seconds measured at 40°C and 50 rotations per minute using HA/HB spindle 5.

These and other embodiments are described in detail below.

### BRIEF DESCRIPTION OF THE DRAWINGS

FIG. 1 presents top (A) and side (B) views of an illustrative confection.

FIG. 2 presents top (A) and side (B) views of cross-sections of an illustrative confection.

FIG. 3 presents cross-sectional views of (A) a confection according to the invention, and (B) a comparative confection after three weeks storage at 37°C and 80 percent relative humidity.

FIGS 4-6 are plots of resistance versus penetration distance for unwrapped confections after having been stored wrapped for 0, 1, and 4 weeks respectively, at 37°C and 80 percent relative humidity.

### DETAILED DESCRIPTION

As mentioned above, the present inventors have conducted research with the goal of providing a confection with a shell and a liquid fat-containing center. This research was motivated by consumer research indicating that using a liquid center rather than a hard or chewy center substantially increased the perceived flavor intensity of the confection. However, in practice it was difficult to create such a confection because liquid fat-containing center compositions that were shelf-stable in isolation exhibited an undesirable hardening over time when surrounded by a shell, as, for example, when a chewy caramel shell was used. The present inventors have now discovered that this undesirable center-hardening process is unexpectedly reduced or eliminated when the center is formulated with a center composition comprising a bulk sweetener and a fat having a slip melting point of 10 to 18°C. The center composition is liquid at or near human body temperature in that it has a Brookfield viscosity of 6,000 to 12,000 millipascal-seconds measured at 40°C and 50 rotations per minute using HA/HB spindle 5. The center composition also resists hardening. For example, in some embodiments, the center composition of an individually wrapped confection exhibits a viscosity change after storage at 37°C and 80% relative humidity for eight weeks that is less than the viscosity change of a corresponding center-filled confection comprising a fat having a slip melting point greater than 18°C. As used herein, the term "individually wrapped confection" refers to confections where each piece is wrapped as well as confections where multiple pieces are wrapped together. The multiple pieces can include any number of individual pieces.

One embodiment is a center-filled confection, comprising: a center comprising a center composition; and a shell comprising a shell composition; wherein the shell contacts and substantially surrounds the center; wherein the center composition comprises a bulk sweetener, and a fat having a slip melting point of 10 to 18°C, and wherein the center composition has a Brookfield viscosity of 4,000 to 12,000 millipascal-seconds measured at 40°C and 50 rotations per minute using HA/HB spindle 5

The center composition comprises a bulk sweetener. The bulk sweetener can be, for example, sucrose, glucose, dextrose, dextrin, xylose, fructose, lactose, ribose, maltose, isomaltulose, hydrogenated isomaltulose, mannose, galactose, corn syrup, sorbitol, xylitol, erythritol, isomalt, invert sugar, fructooligosaccharide syrups, partially hydrolyzed starch, hydrogenated starch hydrolysates, sorbitol, xylitol, maltitol, mannitol, galactitol, lactitol, erythritol, or a combination thereof. In some embodiments, the bulk sweetener comprises sucrose and lactose.

In some embodiments, the center composition comprises 25 to 55 weight percent bulk sweetener. Within this range, the bulk sweetener amount can be at least 30 weight percent, specifically at least 35 weight percent, and up to 50 weight percent, specifically up to 45 weight percent.

In addition to the bulk sweetener, the center composition comprises a fat having a slip melting point of 10 to 18°C. Within this range, the slip melting point of the fat can be at least 11°C, specifically at least 12°C. Also within this range, the slip melting point can be up to 16°C. The slip melting point is one conventional definition of the melting point of a waxy solid. It is determined by casting a 10 millimeter column of the solid in a glass tube with an internal diameter of 1 mm and a length of 80 mm, and then immersing it in a temperature-controlled water bath. The slip point is the temperature at which the column of the solid begins to rise in the tube due to buoyancy, and because the outside surface of the solid is molten. A specific method for measuring slip melting point is described in European Pharmacopoeia 6.2, method 2.2.14.

Fats meeting the slip melting point requirement include non-hydrogenated vegetable fats, hydrogenated vegetable fats, non-hydrogenated animal fats, hydrogenated animal fats, and combinations thereof. In some embodiments, the fat comprises non-hydrogenated vegetable fat. The non-hydrogenated vegetable fat can have a solid fat content less than 5 weight percent, specifically less than 4 weight percent, more specifically less than 3 weight percent, still more specifically less than 2 weight percent, even more specifically less than 1 weight percent, measured at 20°C according to AOCS CA-5A-40. In a very specific embodiment, the non-hydrogenated vegetable fat comprises 25 to 35 weight percent palmitoleic acid, 40 to 50 weight percent oleic acid, and 5 to 15 weight percent linoleic acid. In some embodiments, the fat comprises less than 1 weight percent of trans fat. Fats meeting the slip melting requirement are commercially available and include, for example, those sold as "F 8061", "F 8062", and "F 8063" by Fuji Vegetable Oil.

In some embodiments, the center composition comprises 25 to 40 weight percent total fat content. Within this range, the center composition can comprise at least 30 weight percent total fat content. Also within this range, the center composition can comprise up to 35 weight percent total fat content.

In addition to the bulk sweetener and the fat, the center composition can, optionally, further comprise an emulsifier. In some embodiments, the emulsifier has a hydrophilic-lipophilic balance (HLB) value of 4 to 11. Within this range, the HLB value can be up to 8, specifically up to 7, more specifically up to 6. Hydrophilic-lipophilic balance values can be calculated according to the method of Davies. See, J. T. Davies, "A quantitative kinetic theory of emulsion type, I. Physical chemistry of the emulsifying agent," Gas/Liquid and Liquid/Liquid Interface. Proceedings of the International Congress of Surface Activity (1957), pages 426-438. Specific emulsifiers that can be used in the center composition include, for example, polyglycerol polyricinoleate, sucrose fatty acid esters (especially those having an HLB value of 5 to 7), lecithin, lecithin derivatives, and combinations thereof.

The center composition typically comprises only a very small amount of water. Thus, in some embodiments, the center composition comprises less than or equal to 2 weight percent water, based on the total weight of the center composition. Within this range, the water content can be at least 0.5 weight percent. Also within this range, the weight percent water can be up to 2 weight percent, specifically up to 1.5 weight percent.

The center composition can, optionally, further comprise milk solids. For example, the milk solids can be provided in the form of milk powder. When present in the center composition, the milk solids can be present in an amount of 20 to 35 weight percent, based on the total weight of the center composition. Within this range, the milk solids amount can.be at least 25 weight percent. Also within this range, the milk solids amount can be up to 30 weight percent. The presence of a substantial concentration of milk solids is typically correlated with a high lactose concentration. For example, the milk solids can contribute a lactose concentration of 5 to 15 weight percent, based on the total weight of the center composition.

The center composition can, optionally, further comprise cocoa solids. For example, the cocoa solids can be provided in the form of cocoa powder. When present in the center composition, the cocoa solids amount can be 8 to 15 weight percent, based on the total weight of the center composition. Within this range, the cocoa solids amount can be at least 9 weight percent, specifically at least 10 weight percent, more specifically at least 11 weight percent, yet more specifically at least 12 weight percent. Also within this range, the cocoa solids amount can be up to 14 weight percent, specifically up to 13 weight percent. The presence of a substantial concentration of cocoa solids is typically correlated with a high theobromine concentration. For example, the cocoa solids can contribute a theobromine concentration of 0.1 to 0.5 weight percent, based on the total weight of the center composition.

There is no particular limitation on the flavor of the center composition. In some embodiments the center composition is chocolate flavored. For example, the center composition can be flavored with white chocolate, milk chocolate, or dark chocolate. In other embodiments, the center composition contains one or more artificial or natural flavors known in the art, for example synthetic flavor oils, natural flavoring aromatics and/or oils, oleoresins, extracts derived from plants, leaves, flowers, fruits, and the like, and combinations comprising at least one of the foregoing flavorants. Nonlimiting representative flavors include oils such as spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, cassia oil, and citrus oils including lemon, orange, lime, grapefruit, vanilla, fruit essences, including apple, pear, peach, grape, strawberry, raspberry, blackberry, cherry, plum, pineapple, apricot, banana, melon, tropical fruit, mango, mangosteen, pomegranate, papaya, honey lemon, and the like, or a combination comprising at least one of the foregoing flavorants. Specific flavorants are mints such as peppermint, spearmint, artificial vanilla, cinnamon derivatives, and various fruit flavors. The center composition can, optionally, further include pieces of nuts, seeds, fruit, cocoa nibs, coffee beans, cereals, fibers, and collagen.

An important characteristic of the center composition is that it is liquid at or near the temperature at which it is consumed (that is, at or near human body temperature). Specifically, the center composition can have a Brookfield viscosity of 4,000 to 12,000 millipascal-seconds, measured at 40°C and 50 rotations per minute using HA/HB spindle 5. Within this range, the Brookfield viscosity can be at least 6,000 millipascal-seconds, specifically at least 8,000 millipascal-seconds. Also within this range, the Brookfield viscosity can be up to 10,000 millipascal-seconds. The center composition also resists hardening after being incorporated into the center-filled confection. The hardening resistance can be expressed in relative units. For example, in some embodiments, the center composition of an individually wrapped confection exhibits a viscosity change after storage for eight weeks at 37°C and 80% relative humidity that is less than the viscosity change of a corresponding center-filled confection comprising a fat having a slip melting point greater than 18°C.

In the viscosity change tests, the individual pieces and/or groups of pieces are wrapped with a wrapper, a single thickness of which provides a water vapor transmission rate (WVTR) less than or equal to 5 grams per meter² per 24 hours, as measured according to ASTM F1249-06 at 38°C and 90% relative humidity, where the relative humidity is defined as the difference between the humidities of the two chambers used in the WVTR testing. In some embodiments, the WVTR is less than or equal to 3 grams per meter² per 24 hours, specifically less than or equal to 1 gram per meter² per 24 hours, more specifically less than or equal to 0.5 gram per meter² per 24 hours. Wrappers capable of providing WVTR values in the specific range are known in the art, and illustrative examples are described below.

In addition to a center, the center-filled confection includes a shell contacting and substantially surrounding the center. The shell comprises a shell composition. As used herein, the term "shell composition" refers to a hard or chewy dissolvable confectionery composition. The shell composition is not a chewing gum composition. The shell composition is also not a high-fat confectionery material such as chocolate or chocolate substitutes including white chocolate or compound coatings, where "high-fat" refers to confectionery materials with at least 20 weight percent fat. In some embodiments, the shell composition is a chewy composition that does not include hard boiled confectionery. In other embodiments, the shell composition is a hard boiled confectionery composition that excludes chewy compositions. In some embodiments, the shell composition is a caramel shell composition comprising milk solids, vegetable fat, glucose, and sucrose. The caramel shell composition can, optionally, further comprise emulsifiers, salts, flavorings, and various other additives known in the confectionery arts. Other suitable flavors for the shell composition include brown flavors (including chocolate, butterscotch, vanilla, coffee, toffee), fruit and vegetable flavors (include berries, citrus, tropical fruit, celery, and carrots), spice flavors (including cinnamon, nutmeg, aniseed), and condiment flavors (including salt and pepper). Illustrative shell compositions are provided in the working examples. The shell composition typically contains some water. For example, the shell composition can comprise 5 to 9 weight percent water, based on the total weight of the shell composition. Within this range, the water content can be at least 6 weight percent, specifically at least 6.5 weight percent. Also within this range, the water content can be up to 8 weight percent, specifically up to 7.5 weight percent.

As described above, the liquid texture of the center composition can be objectively characterized by a Brookfield viscosity at 40°C. The liquid texture is also evident from the drop in resistance force as a probe is displaced through the thickness of the confection. The resistance force experiment is described in detail in the working examples and involves the placement of a confection on its side on a platform and the measurement of force as a cylindrical probe is driven through entire width of the confection: first through the section of shell furthest from the platform, then through the center, and finally through the section of shell adjacent to the platform. In some embodiments, the center-filled confection exhibits a maximum resistance of 200 to 800 gram force as the shell is penetrated, and a maximum resistance of 10 to 100 gram force as the center is penetrated, all as measured at 32°C using a 2 millimeter diameter cylindrical probe as described in the working examples.

The center-filled confection can consist of a single center and a single shell. Alternatively, the center-filled confection can include multiple layers of shell composition or center composition or both, or it may comprise additional confectionery layers that are neither shell composition nor center composition. Examples of additional confectionery layers include sugar soft panned layers, sugar hard panned layers, cocoa dusting layers, chocolate coating layers, and combinations thereof.

When the center-filled confection consists of the center and the shell, it typically comprises 50 to 95 weight percent of the shell composition, and 5 to 50 weight percent of the center composition, based on the total weight of the center-filled confection. Within these ranges, the shell composition content can be at least 60 weight percent, specifically at least 70 weight percent, more specifically at least 80 weight percent; and the shell composition amount can be up to 90 weight percent, specifically up to 87 weight percent. Also within these ranges, the center composition can be at least 10 weight percent, specifically at least 13 weight percent; and the center composition can be up to 40 weight percent, specifically up to 30 weight percent, more specifically up to 25 weight percent, even more specifically up to 20 weight percent.

In a specific embodiment, the center composition comprises, based on the total weight of the center composition, 30 to 35 weight percent sucrose, 5 to 15 weight percent lactose, 0.1 to 0.5 weight percent theobromine, 22 to 28 weight percent of a non-hydrogenated vegetable fat having a slip melting point of 10 to 18°C and a solid fat content less than 1 weight percent at 20°C, 0.2 to 0.4 weight percent of polyglycerol polyricinoleate, 0.3 to 0.5 weight percent lecithin, 0.3 to 0.8 weight percent of an emulsifier comprising polyglycerol polyricinoleate and a sucrose fatty acid ester, and less than or equal to 1.5 weight percent water; the center composition has a Brookfield viscosity of 8,000 to 10,000 millipascal-seconds measured at 40°C and 50 rotations per minute using HA/HB spindle 5; the center composition of an individually wrapped confection exhibits a viscosity change after storage at 37°C and 80% relative humidity for eight weeks that is less than the viscosity change of a corresponding center-filled confection comprising a fat having a slip melting point greater than 18°C; the shell composition is a caramel shell composition comprising milk solids, vegetable fat, glucose, and sucrose; the shell composition comprises 7 to 9 weight percent water; the center-filled confection exhibits a maximum resistance of 200 to 800 gram force as the shell is penetrated, and a maximum resistance of 10 to 100 gram force as the center is penetrated, all as measured at 32°C using a 2 millimeter diameter cylindrical probe as described in the working examples; and the center-filled confection consists of the center and the shell.

The center composition and/or the shell composition can, optionally, further comprise one or more conventional additives for confectionery compositions. Such additives include high intensity sweeteners, flavor modulators or potentiators, coloring agents, oral care agents, throat care agents, breath fresheners, mineral adjuvants, bulking agents, acidulants, buffering agents, sensates (e.g., warming agents, coolants, tingling agents, effervescent agents), thickeners, mouth moisteners, flavor enhancing compositions, antioxidants (e.g., butylated hydroxytoluene (BHT), butylated hydroxyanisole (BHA), or propyl gallate), preservatives, and the like. Some of these additives can serve more than one purpose. For example, a sweetener, e.g., sucrose, sorbitol or other sugar alcohol, or combinations of the foregoing sweeteners, can also function as a bulking agent. A combination at least two of the foregoing additives is often used.

A "high intensity sweetener" as used herein means agents having a sweetness at least 100 times that of sugar (sucrose) on a per weight basis, specifically at least 500 times that of sugar on a per weight basis. In one embodiment the high intensity sweetener is at least 1,000 times that of sugar on a per weight basis, more specifically at least 5,000 times that of sugar on a per weight basis. The high intensity sweetener can be selected from a wide range of materials, including water-soluble sweeteners, water-soluble artificial sweeteners, water-soluble sweeteners derived from naturally occurring water-soluble sweeteners, dipeptide based sweeteners, and protein based sweeteners. Combinations comprising one or more sweeteners or one or more of the foregoing types of sweeteners can be used. Without being limited to particular sweeteners, representative categories and examples include: water-soluble sweetening agents such as dihydrochalcones, monellin, monatin, steviosides, glycyrrhizin, dihydroflavenol, and sugar alcohols such as sorbitol, mannitol, maltitol, erythritol, xylitol, lactitol, and L-aminodicarboxylic acid aminoalkenoic acid ester amides, such as those disclosed in U.S. Pat. No. 4,619,834, or a combination comprising at least one of the foregoing; water-soluble artificial sweeteners such as soluble saccharin salts, i.e., sodium or calcium saccharin salts, cyclamate salts, acesulfame salts, such as the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, or a combination comprising at least one of the foregoing; dipeptide based sweeteners, for example the L-aspartic acid derived sweeteners such as L-aspartyl-L-phenylalanine methyl ester (Aspartame) and materials described in U.S. Pat. No. 3,492,131, L-alpha-aspartyl-N-(2,2,4,4-tetramethyl-3-thietanyl)-D-alaninamide hydrate (Alitame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, neotame, or a combination comprising at least one of the foregoing; water-soluble sweeteners derived from naturally occurring water-soluble sweeteners, such as steviosides, chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichlorol',6'-dideoxysucrose; 4-chloro-4-deoxy-alpha-D-galactopyranosyl-1,6-dichloro-1,6-dideoxy-beta-D-fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D-fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galactopyranosyl-1,6-dichloro-1,6-dideox y-beta-D-fructofuranoside, or 4,6,1',6'-tetrachloro4,6,1',6'-tetradeoxygalacto-sucrose; 4,6,1',6'-tetradeoxy-sucrose, or a combination comprising at least one of the foregoing; protein based sweeteners such as thaumaoccous danielli, talin, or a combination comprising at least one of the foregoing; and amino acid based sweeteners.

The high intensity sweetener can be used in a variety of distinct physical forms, for example those known in the art to provide an initial burst of sweetness and/or a prolonged sensation of sweetness. Without being limited thereto, such physical forms include free forms (e.g., spray dried or powdered), beaded forms, encapsulated forms, or a combination comprising at least one of the foregoing forms.

In the center-filled confectionery, a sweet taste can come from flavor modulators or potentiators and/or from flavorants as well as from sweeteners. Flavor potentiators can consist of materials that intensify, supplement, modify or enhance the taste or aroma perception of an original material without introducing a characteristic taste or aroma perception of their own. Flavor modulators can impart a characteristic of their own that complements or negates a characteristic of another component. In some embodiments, flavor modulators or potentiators are designed to intensify, supplement, modify, or enhance the perception of flavor, sweetness, tartness, umami, kokumi, saltiness and combinations thereof can be included. Thus, the addition of flavor modulators or potentiators can impact the overall taste of the center-filled confection. For example, flavors can be compounded to have additional sweet notes by the inclusion of flavor modulators or potentiators, such as vanilla, vanillin, ethyl maltol, furfual, ethyl propionate, lactones, or a combination comprising at least one of the foregoing flavor agents.

Exemplary flavor modulators or potentiators include monoammonium glycyrrhizinate, licorice glycyrrhizinates, citrus aurantium, alapyridaine, alapyridaine (N-(1-carboxyethyl)-6-(hydroxymethyl)pyridinium-3-ol) inner salt, miraculin, curculin, strogin, mabinlin, gymnemic acid, cynarin, glupyridaine, pyridinium-betain compounds, neotame, thaumatin, neohesperidin dihydrochalcone, tagatose, trehalose, maltol, ethyl maltol, vanilla extract, vanilla oleoresin, vanillin, sugar beet extract (alcoholic extract), sugarcane leaf essence (alcoholic extract), compounds that respond to G-protein coupled receptors (T2Rs and T1Rs), or a combination comprising at least one of the foregoing. In some embodiments, sugar acids, sodium chloride, potassium chloride, sodium acid sulfate, or a combination comprising at least one of the foregoing are used. In other embodiments, glutamates such as monosodium glutamate, monopotassium glutamate, hydrolyzed vegetable protein, hydrolyzed animal protein, yeast extract, or a combination comprising at least one of the foregoing are included. Further examples include adenosine monophosphate (AMP), glutathione, and nucleotides such as inosine monophosphate, disodium inosinate, xanthosine monophosphate, guanylate monophosphate, or a combination comprising at least one of the foregoing. Further examples of flavor potentiator compositions that impart kokumi are also included in U.S. Patent No. 5,679,397 to Kuroda et al.

The amount of flavor modulators, flavor potentiators, and flavorants used herein can be a matter of preference subject to such factors as the type of final center-filled confection, the individual flavor, the confectionary base employed, and the strength of flavor desired. Thus, the amount of flavoring can be varied in order to obtain the result desired in the final product and such variations are within the capabilities of those skilled in the art without the need for undue experimentation.

Coolants are additives that provide a cooling or refreshing effect in the mouth, in the nasal cavity, or on skin. Menthyl-based coolants as used herein include menthol and menthol derivatives. Menthol (also known as 2-(2-propyl)-5-methyl-1-cyclohexanol) is available in artificial form, or naturally from sources such as peppermint oil. Menthol derivatives included menthyl ester-based and menthyl carboxamide-based cooling compounds such as menthyl carboxamide, N-ethyl-p-menthane carboxamide, monomenthyl succinate, monomenthyl-alpha, monomenthyl methyl succinate, monomenthyl glutarate, menthyl 2- pyrrolidone-5-carboxylate, monomenthyl 3-methyl maleate, menthyl acetate, menthyl lactate, menthyl salicylate, 2-isopropanyl-5-methylcyclohexanol, 3,1-menthoxypropane 1,2-diol, menthane, menthone, menthone ketals, menthone glycerol ketals, menthyl glutarate esters, N-ethyl-p-menthane-3-carboxamide (WS-3), or a combination comprising at least one of the foregoing.

Other coolants can be used in combination with the menthyl-based coolant, for example 2-mercapto-cyclo-decanone, hydroxycarboxylic acids with 2 to 6 carbon atoms, N,2,3-trimethyl-2-isopropyl butanamide, xylitol, erythritol, alpha-dimethyl succinate, methyl lactate, or a combination comprising at least one of the foregoing.

Warming components can be selected from a wide variety of compounds known to provide the sensory signal of warming to the user. These compounds offer the perceived sensation of warmth, particularly in the oral cavity, and often enhance the perception of flavors, sweeteners and other organoleptic components. Among the useful warming compounds included are vanillyl alcohol n-butylether (TK-1000) supplied by Takasago Perfumary Company Limited, Tokyo, Japan, vanillyl alcohol n-propylether, vanillyl alcohol isopropylether, vanillyl alcohol isobutylether, vanillyl alcohol n-aminoether, vanillyl alcohol isoamyleather, vanillyl alcohol n-hexylether, vanillyl alcohol methylether, vanillyl alcohol ethyl ether, gingerol, shogaol, paradol, zingerone, capsaicin, dihydrocapsaicin, nordihydrocapsaicin, homocapsaicin, homodihydrocapsaicin, ethanol, isopropyl alcohol, iso-amyl alcohol, benzyl alcohol, glycerine, and a combination comprising at least one of the foregoing.

Coloring agents (colorants, colorings) can be used in amounts effective to produce a desired color for the center-filled confection. Suitable coloring agents include pigments, which can be incorporated in amounts up to 6 wt % (weight %) by weight of the center-filled confection. For example, titanium dioxide can be incorporated in amounts up to 2 wt %, and specifically less than 1 wt % by weight of the center-filled confection. Suitable coloring agents also include natural food colors and dyes suitable for food, drug, and cosmetic applications. Suitable colors include annatto extract (E160b), bixin, norbixin, astaxanthin, dehydrated beets (beet powder), beetroot red/betanin (E162), ultramarine blue, canthaxanthin (E161g), cryptoxanthin (E161c), rubixanthin (E161d), violanxanthin (E161e), rhodoxanthin (E161f), caramel (E150(a-d)), β-apo-8'-carotenal (E160e), β-carotene (E160a), alpha carotene, gamma carotene, ethyl ester of beta-apo-8 carotenal (E160f), flavoxanthin (E161a), lutein (E161b), cochineal extract (E120), carmine (E132), carmoisine/azorubine (E122), sodium copper chlorophyllin (E141), chlorophyll (E140), toasted partially defatted cooked cottonseed flour, ferrous gluconate, ferrous lactate, grape color extract, grape skin extract (enocianina), anthocyanins (E163), haematococcus algae meal, synthetic iron oxide, iron oxides and hydroxides (E172), fruit juice, vegetable juice, dried algae meal, tagetes (Aztec marigold) meal and extract, carrot oil, corn endosperm oil, paprika, paprika oleoresin, phaffia yeast, riboflavin (E101), saffron, titanium dioxide, turmeric (E100), turmeric oleoresin, amaranth (E123), capsanthin/capsorbin (E160c), lycopene (E160d), FD&C blue #1, FD&C blue #2, FD&C green #3, FD&C red #3, FD&C red #40, FD&C yellow #5 and FD&C yellow #6, tartrazine (E102), quinoline yellow (E104), sunset yellow (E110), ponceau (E124), erythrosine (E127), patent blue V (E131), titanium dioxide (E171), aluminum (E173), silver (E174), gold (E175), pigment rubine/lithol rubine BK (E180), calcium carbonate (E170), carbon black (E153), black PN/brilliant black BN (E151), green S/acid brilliant green BS (E142), or a combination comprising at least one of the foregoing. In some embodiments, certified colors can include FD&C aluminum lakes, or a combination comprising at least one of the foregoing colors.

Exemplary breath fresheners include to zinc citrate, zinc acetate, zinc fluoride, zinc ammonium sulfate, zinc bromide, zinc iodide, zinc chloride, zinc nitrate, zinc fluorosilicate, zinc gluconate, zinc tartrate, zinc succinate, zinc formate, zinc chromate, zinc phenol sulfonate, zinc dithionate, zinc sulfate, silver nitrate, zinc salicylate, zinc glycerophosphate, copper nitrate, chlorophyll, copper chlorophyll, chlorophyllin, hydrogenated cottonseed oil, chlorine dioxide, beta cyclodextrin, zeolite, silica-based material, carbon-based material, enzymes such as laccase, or a combination comprising at least one of the foregoing. Breath fresheners can include essential oils as well as various aldehydes and alcohols. Essential oils used as breath fresheners can include oils of spearmint, peppermint, wintergreen, sassafras, chlorophyll, citral, geraniol, cardamom, clove, sage, carvacrol, eucalyptus, cardamom, magnolia bark extract, marjoram, cinnamon, lemon, lime, grapefruit, orange, or a combination comprising at least one of the foregoing. Aldehydes such as cinnamic aldehyde and salicylaldehyde can be used. Additionally, chemicals such as menthol, carvone, iso-garrigol, and anethole can function as breath fresheners.

In one embodiment, the center-filled confection comprises a flavor enhancing composition that imparts a taste-masking effect to counteract any bitter or unpleasant off-note otherwise imparted by the confection. The flavor enhancing composition can comprise sweeteners, high intensity sweeteners, flavor modulators, flavor potentiators, flavoring agents, sensates, and a combination of at least one of the foregoing.

Exemplary mouth moisteners include saliva stimulators such as acids and salts including acetic acid, adipic acid, ascorbic acid, butyric acid, citric acid, formic acid, fumaric acid, glyconic acid, lactic acid, phosphoric acid, malic acid, oxalic acid, succinic acid, and tartaric acid. Mouth moisteners can include hydrocolloid materials that hydrate and can adhere to oral surface to provide a sensation of mouth moistening. Hydrocolloid materials can include naturally occurring materials such as plant exudates, seed gums, and seaweed extracts or they can be chemically modified materials such as cellulose, starch, or natural gum derivatives. Furthermore, hydrocolloid materials can include pectin, gum arabic, acacia gum, alginates, agar, carageenans, guar gum, xanthan gum, locust bean gum, gelatin, gellan gum, galactomannans, tragacanth gum, karaya gum, curdlan, konjac, chitosan, xyloglucan, beta glucan, furcellaran, gum ghatti, tamarin, and bacterial gums. Mouth moisteners can include modified natural gums such as propylene glycol alginate, carboxymethyl locust bean gum, low methoxyl pectin, or a combination comprising at least one of the foregoing. Modified celluloses can be included such as microcrystalline cellulose, carboxymethlcellulose (CMC), methylcellulose (MC), hydroxypropylmethylcellulose (HPCM), hydroxypropylcellulose (MPC), or a combination comprising at least one of the foregoing mouth moisteners.

Similarly, humectants, which can provide a perception of mouth hydration, can be included. Such humectants can include glycerol, sorbitol, polyethylene glycol, erythritol, xylitol, or a combination comprising at least one of the foregoing. Additionally, in some embodiments, fats can provide a perception of mouth moistening. Such fats can include medium chain triglycerides, vegetable oils, fish oils, mineral oils, or a combination comprising at least one of the foregoing.

Suitable acidulants illustratively include acetic, citric, fumaric, hydrochloric, lactic and nitric acids as well as sodium citrate, sodium bicarbonate and carbonate, sodium or potassium phosphate and magnesium oxide, potassium metaphosphate, sodium acetate, or a combination comprising at least one of the foregoing acidulants.

Exemplary buffering agents include sodium bicarbonate, sodium phosphate, sodium hydroxide, ammonium hydroxide, potassium hydroxide, sodium stannate, triethanolamine, citric acid, hydrochloric acid, sodium citrate, or a combination comprising at least one of the foregoing buffering agents.

The relative amounts of each of the components of the center-filled confection will depend on the particular form of the center-filled confection, as well as the types of coolant, high intensity sweetener, and optional additives, if any, as well as the desired flavor, and are readily determined by one of ordinary skill in the art without undue experimentation.

In some embodiments, a tingling sensation can be provided. Tingling agents include jambu, and alkylamides extracted from materials such as jambu or sanshool.

Additionally, a sensation can be created due to effervescence. Such effervescence is created by combining a basic material with an acidic material. In some embodiments, a basic material can include alkali metal carbonates, alkali metal bicarbonates, alkaline earth metal carbonates, alkaline earth metal bicarbonates and mixtures thereof. In some embodiments, an acidic material can include acetic acid, adipic acid, ascorbic acid, butyric acid, citric acid, formic acid, fumaric acid, glyconic acid, lactic acid, phosphoric acid, malic acid, oxalic acid, succinic acid, tartaric acid and combinations thereof.

Suitable oral care agents include breath fresheners, tooth whiteners, antimicrobial agents, tooth mineralizers, tooth decay inhibitors, topical anesthetics, mucoprotectants, stain removers, oral cleaning, bleaching agents, desensitizing agents, dental remineralization agents, antibacterial agents, anticaries agents, plaque acid buffering agents, surfactants and anticalculus agents, and a combination comprising at least one of the foregoing.. Non-limiting examples of such ingredients can include, hydrolytic agents including proteolytic enzymes, abrasives such as hydrated silica, calcium carbonate, sodium bicarbonate and alumina, other active stain-removing components such as surface-active agents, including anionic surfactants such as sodium stearate, sodium palminate, sulfated butyl oleate, sodium oleate, salts of fumaric acid, glycerol, hydroxylated lecithin, sodium lauryl sulfate and chelators such as polyphosphates, which are typically employed as tartar control ingredients. Oral care ingredients can also include tetrasodium pyrophosphate and sodium tri-polyphosphate, sodium bicarbonate, sodium acid pyrophosphate, sodium tripolyphosphate, xylitol, sodium hexametaphosphate.

In addition, suitable oral care agents include peroxides such as carbamide peroxide, calcium peroxide, magnesium peroxide, sodium peroxide, hydrogen peroxide, and peroxydiphospate. In some embodiments, potassium nitrate and potassium citrate are included. Other examples can include casein glycomacropeptide, calcium casein peptone-calcium phosphate, casein phosphopeptides, casein phosphopeptide-amorphous calcium phosphate (CPP-ACP), and amorphous calcium phosphate. Still other examples can include papaine, krillase, pepsin, trypsin, lysozyme, dextranase, mutanase, glycoamylase, amylase, glucose oxidase, and combinations thereof.

Suitable oral care agents include surfactants which achieve increased prophylactic action and to render the oral care ingredients more cosmetically acceptable. Surfactants used as oral care agents can include detersive materials that impart to the composition detersive and foaming properties. Suitable surfactants include sodium stearate, sodium ricinoleate, sodium lauryl sulfate, water-soluble salts of higher fatty acid monoglyceride monosulfates, such as the sodium salt of the monosulfated monoglyceride of hydrogenated coconut oil fatty acids, higher alkyl sulfates such as sodium lauryl sulfate, alkyl aryl sulfonates such as sodium dodecyl benzene sulfonate, higher alkyl sulfoacetates, sodium lauryl sulfoacetate, higher fatty acid esters of 1,2-dihydroxy propane sulfonate, and the substantially saturated higher aliphatic acyl amides of lower aliphatic amino carboxylic acid compounds, such as those having 12 to 16 carbons in the fatty acid, alkyl or acyl radicals, and the like. Examples of the last mentioned amides are N-lauroyl sarcosine, and the sodium, potassium, and ethanolamine salts of N-lauroyl, N-myristoyl, or N-palmitoyl sarcosine.

In addition to surfactants, oral care ingredients can include antibacterial agents comprising triclosan, chlorhexidine, zinc citrate, silver nitrate, copper, limonene, and cetyl pyridinium chloride.

Anticaries agents can include fluoride ions, fluorine-providing components (e.g., inorganic fluoride salts), soluble alkali metal salts (e.g., sodium fluoride, potassium fluoride, sodium fluorosilicate, ammonium fluorosilicate, potassium fluoride, sodium monofluorophosphate), and tin fluorides, (e.g., such as stannous fluoride and stannous chloride, potassium stannous fluoride (SnF.sub.2 -KF), sodium hexafluorostannate, stannous chlorofluoride). Further examples are included in the following U.S. Patents that are incorporated in their entirety herein by reference: U.S. Patent Nos. 5,227,154 to Reynolds, 5,378,131 to Greenberg, and 6,685,916 to Holme et al.

Throat care or throat-soothing ingredients include analgesics, antihistamines, anesthetics, demulcents, mucolytics, expectorants, antitussive, and antiseptics. In some embodiments, throat soothing agents such as honey, propolis, aloe vera, glycerine, menthol and a combination comprising at least one of the foregoing.

The center-filled confection can exclude ingredients not described herein as required or optional. For example, the center-filled confection can exclude gum bases and medicaments.

Another embodiment is a method of making a center-filled confection, comprising: extruding a center-filled rope comprising a shell comprising a shell composition and a center comprising a center composition; and forming individual pieces from the center-filled rope; wherein, in the individual pieces, the shell contacts and substantially surrounds the center; wherein the center composition comprises a bulk sweetener, and a fat having a slip melting point of 10 to 18 °C, and wherein the center composition has a Brookfield viscosity of 4,000 to 12,000 millipascal-seconds measured at 40°C and 50 rotations per minute using HA/HB spindle 5. Confectionery apparatuses and methods for extruding center-filled ropes and forming individual pieces from center-filled ropes are known in the art and described in, for example, U.S. Patent Nos. 4,316,915 to Friello et al., 4,466,983 to Cifrese et al., 4,614,658 to Wilson et al., 6,280,780 to Degady et al., and 6,531,174 to Barrett et al.; U.S. Patent Application Publication Nos. US 2007/0104828 A1, US 2007/0104830 A1, and US 2008/0050483 A1 of Fornaguera; and International Patent Application Publication No. WO2008030274 A1 of Massey. All of the embodiments described above in the context of the center-filled confection are also applicable to the method.

The invention is further illustrated by the following non-limiting examples.

### EXAMPLE 1

This example describes an illustrative procedure for preparing a chocolate-filled caramel confection. The chocolate center and caramel coating are prepared separately and combined to prepare the confection.

Part 1. Chocolate Center Making

Part 1.1. Mixing and refining. The total composition of the chocolate center is presented in Table 1, where component amounts are presented in units of weight percent, based on the total weight of the chocolate center. The Table 1 "Vegetable Fat #1" is a vegetable fat having a slip melting point of about 14°C. The Table 1 "Emulsifier" is a mixture of polyglycerol polyricinoleate and sucrose fatty acid esters. Sugar, cocoa powder, lactose, milk powder, and vegetable fat (60 weight percent of the total vegetable fat in the chocolate center) are loaded into a mixer and mixed for 15-20 minutes at ambient temperature. The resulting mixed paste is discharged into a refiner and refined until a desired particle size is achieved (typically about 18 to 28 micrometers), thereby producing a refined mass.

Part 1.2. Conching. The refined mass is loaded with additional vegetable fat (10-15 weight percent of the total vegetable fat in the chocolate center) and lecithin into a conche with a set temperature of 48-57°C and conched for two to five hours. The remaining fat (25-30 weight percent of the total vegetable fat in the chocolate center), emulsifier, and flavors are then loaded into the conche and the resulting mixture is conched for a period of time (typically about 20 minutes), until a desired viscosity is achieved (typically about 6,000 to 12,000 millipascal-seconds at 40°C). The resulting chocolate center composition is discharged from the conche and held in a storage tank at 45°C until it is combined with the caramel shell.

**Table 1. Chocolate Center Composition**

| Component | Amount (wt %) |
|---|---|
| Sucrose / Icing Sugar | 30 - 38 |
| Full Cream Milk Powder or Skim Powder | 18 - 30 |
| Lactose | 1 - 2 |
| Milk Fat | 0 - 9 |
| Cocoa Butter | 0 - 3 |
| Vegetable Fat # 1 | 20 - 30 |
| Alkalized Cocoa Powder | 9 - 15 |
| Emulsifier | 0.1 - 0.8 |
| Lecithin | 0.1 - 0.5 |
| Flavors | 0.02 - 0.04 |

Part 2: Caramel Shell Making

Part 2.1. Glycerol monostearate (GMS) solution making. The total composition of the caramel shell is presented in Table 2, where component amounts are presented in units of weight percent, based on the total weight of the caramel shell. Soft confectionery vegetable fat (25 weight percent of the total soft confectionery vegetable fat in the caramel shell composition) is heated to 80°C, then GMS powder is mixed into the fat until the GMS is dissolved completely, thereby forming the glycerol monostearate solution.

Part 2.2. Milk syrup making. Concentrated milk is loaded into a steam-jacketed tank and agitated. Sugar, salt, GMS solution, and flavor are added into the tank and the resulting milk syrup is warmed to 65°C and mixed for about five minutes before being transferred to a holding tank and maintained at 65°C until further use.

Part 2.3. Cooking and forming. Milk syrup, glucose syrup, and soft confectionery vegetable fat (90 weight percent of the total PCF vegetable fat in the caramel shell composition) are metered into a mixing tank and mixed for about five minutes 65°C before being discharged to a jacketed holding tank that maintains the mixture at 60-65°C. This mixture is then fed into a tank and heated to 75-92°C with steam before being pumped to a cooker. In the cooker, the mixture is heated to 120.5-123.5°C with steam to form the caramel. From the cooker, the caramel is discharged to a cooling drum where it is cooled to 40-45°C and maintained at that temperature until is it combined with the chocolate center composition.

**Table 2. Caramel Shell Composition**

| Component | Amount (wt %) |
|---|---|
| Milk Concentrate (48% solids) or | 18 - 30 |
| Skim Milk Powder | 25 - 27 |
| Soft Confectionery Vegetable Fat | 9 - 17 |
| Gum Arabic | 0 - 1 |
| Glycerol Monostearate | 0.0 - 0.8 |
| Glucose Syrup (78%) | 35 - 47 |
| Sucrose | 20 - 34 |
| Salt | 0.2 - 0.6 |
| Flavors | 0.005 - 0.2 |

Part 3. Formation of the Chocolate-Filled Caramel Confection.

Part 3.1. The cooled caramel is transferred to a batch roller where the chocolate center at 39°C is combined with the caramel at 44-46°C through a concentric tube (that is, a circular die (for the chocolate center) within an annular die (for the caramel coating)) to form a chocolate center-filled caramel rope. The weight ratio of caramel shell to chocolate center is typically about 4:1 to 6:1. The filled rope is sized and individual pieces of chocolate-filled caramel candies are formed in a forming die. Prior to packaging, the individual pieces are transported through a cooling tunnel in which air at 10°C is circulated.

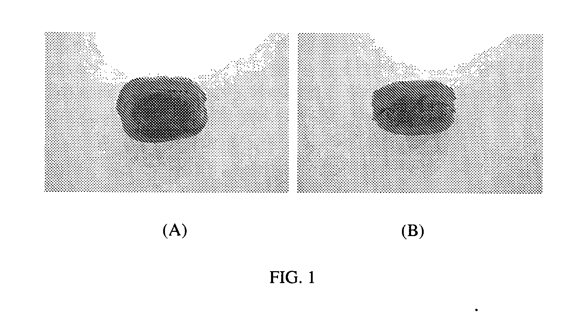

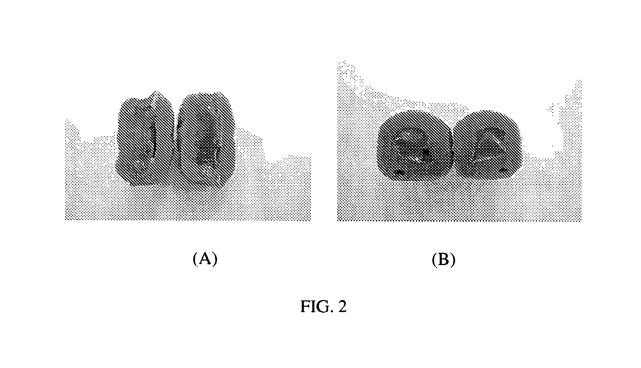

A side view of an illustrative confection is presented in FIG. 1. A cross-section of an illustrative confection is presented in FIG. 2.

### EXAMPLES 2-9, COMPARATIVE EXAMPLES 1-8

These examples illustrate the textures of center-filled confections, both initially and after accelerated aging.

For Examples 2-9, center-filled confections were prepared according to the procedure of Example 1. The "Vegetable Fat #2" in Table 2 is a vegetable fat having a slip melting point of about 30°C. Individual confections were roughly cylindrical in shape, with a length of about 25 to 28 millimeters and a width of about 15 to 21 millimeters. The individual confections were packaged in a 12 micrometer thick poly(ethylene terephthalate) / metallized cast polypropylene wrapper which was heat sealed on each end. For Comparative Examples 1-8, the same procedure was followed except that the center composition was a specified in Table 3.

**Table 3. Comparative Chocolate Center Composition**

| Component | Amount (wt %) |
|---|---|
| Sucrose / Icing Sugar | 30 - 38 |
| Full Cream Milk Powder or Skim Milk Powder | 12 - 30 |
| Lactose | 1 - 2 |
| Milk Fat | 4 - 9 |
| Vegetable Fat #2 | 20 - 30 |
| Cocoa Butter | 0 - 3 |
| Alkalized Cocoa Powder | 6 - 15 |
| Emulsifier | 0.2 - 1 |
| Lecithin | 0.2 - 0.7 |
| Flavors | 0.02 - 0.04 |

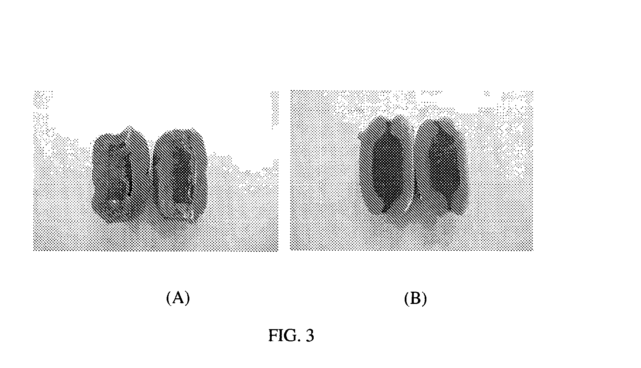

As shown in FIG. 3(A), the center of the inventive confection did not harden after three weeks at 37°C and 80% relative humidity. In contrast and as shown in FIG. 3(B), the center of the comparative confection hardened under the same conditions.

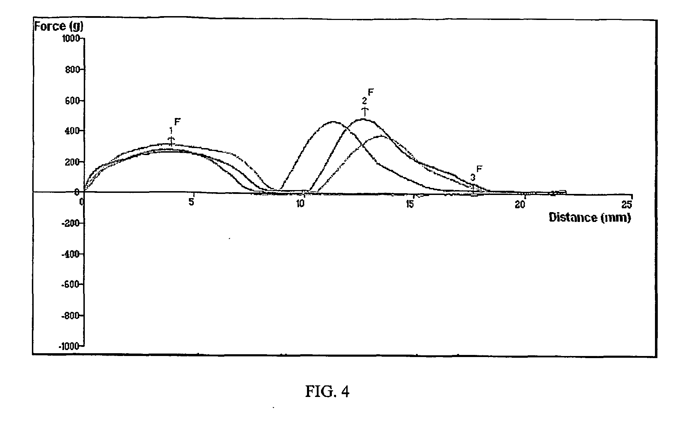

Texture analysis was conducted by measuring the resistive force of a 2 millimeter cylindrical probe as it penetrated the width of a single unwrapped confection. The test was conducted at 32°C using a test speed of 2.0 millimeters per second and a data acquisition rate of 200 points per second. Representative plots of force versus penetration distance for three as-prepared (week zero) samples are shown in FIG. 4. The plots for all three samples at week zero show a maximum force of 265 to 315 gram force as the first surface of the shell is penetrated, a maximum force of 11.4 to 21.9 gram force as the liquid center is penetrated, a maximum force of 380 to 492 gram force as the second surface of the shell is penetrated, and a force decreasing to zero as the probe passes entirely through the confection.

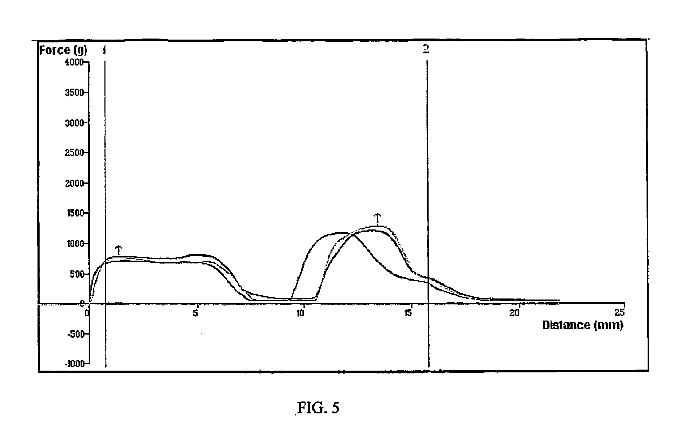

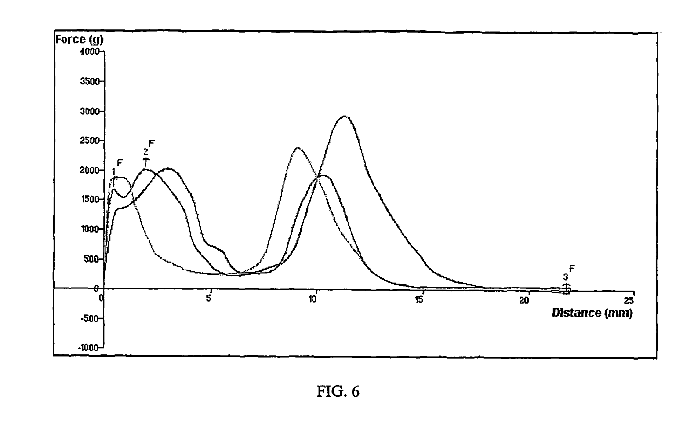

Similar tests were conducted on confections that had been stored in their wrappers at 37°C and 80 percent relative humidity for 1, 2, 3, 4, 5, 6, 7, and 8 weeks. The results after 1 and 4 weeks are shown in FIGS. 5 and 6, respectively. The results show that the resistance of the center composition increases slightly over time but remains less than or equal to about 300 gram force between week 0 and week 4. The results also show that shell hardens over time.

### EXAMPLE 10

The composition of a high-boil chocolate candy shell composition is given in Table 4. The composition is prepared using the procedure specified above for caramel shell making, except that it is cooked at a higher temperature of about 140 to about 160°C and formed at the batch roller at a higher temperature of about 50 to about 55°C.

**Table 4. Chocolate-Flavored Shell Composition**

| Component | Amount (wt %) |
|---|---|
| Sweetened Condensed Milk | 2 - 10 |
| Anhydrous Milk Fat | 1.5 - 3 |
| glucose syrup (43DE) | 15 - 18 |
| Sucrose | 45 - 50 |
| Cocoa Powder | 1 - 2 |
| Salt | 0.3 - 1 |
| Lecithin | 0.05 - 0.2 |
| Water | 20 - 22 |
| Flavor | 0.05 - 0.6 |

### EXAMPLE 11

The composition of a hazelnut-flavored center composition is given in Table 5. The composition is prepared using the procedure specified above for the Table 1 chocolate center composition, except that it contains kibble hazelnut pieces and different flavors.

**Table 5. Hazelnut-Flavored Center Composition**

| Component | Amount (wt %) |
|---|---|
| Icing Sugar | 30 - 34 |
| Full Cream Milk Powder | 26 - 29 |
| Lactose | 1 - 2 |
| Vegetable Fat #1 | 22 - 26 |
| Alkalized Cocoa Powder | 11 - 14 |
| Hazelnut Pieces | 12 - 18 |
| Emulsifiers | 0.30 - 0.8 |
| Soy Lecithin | 0.2 - 0.4 |
| Flavors | 0.02 - 0.2 |

### EXAMPLE 12

The composition of a blueberry-flavored center composition is given in Table 6. The composition is prepared using the procedure specified above for the Table 1 chocolate center composition, except that it contains blueberry pieces and different flavors.

**Table 6. Blueberrv-Flavored Center Composition**

| Component | Amount (wt %) |
|---|---|
| Icing Sugar | 30 - 34 |
| Full Cream Milk Powder | 26 - 29 |
| Lactose | 1 - 2 |
| Vegetable Fat #1 | 22 - 26 |
| Alkalised Cocoa Powder | 11 - 14 |
| Emulsifiers | 0.30 - 0.8 |
| Soy Lecithin | 0.2 - 0.4 |
| Blueberry pieces | 0.2 - 0.5 |
| Citric Acid | 0.02 - 0.05 |
| Flavors | 0.02 - 0.05 |

### EXAMPLE 13

The composition of a coffee-flavored center composition is given in Table 7. The composition is prepared using the procedure specified above for the Table 1 chocolate center composition, except that it contains coffee powder and different flavors.

**Table 7. Coffee-Flavored Center Composition**

| Component | Amount (wt %) |
|---|---|
| Icing Sugar | 30 - 34 |
| Full Cream Milk Powder | 26 - 29 |
| Lactose | 1 - 2 |
| Vegetable Fat #1 | 22 - 26 |
| Alkalized Cocoa Powder | 11 - 14 |
| Coffee Powder | 0.05 - 0.2 |
| Emulsifiers | 0.30 - 0.8 |
| Soy Lecithin | 0.2 - 0.4 |
| Flavors | 0.01 - 0.2 |

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

All ranges disclosed herein are inclusive of the endpoints, and the endpoints are independently combinable with each other.

The use of the terms "a" and "an" and "the" and similar referents in the context of describing the invention (especially in the context of the following claims) are to be construed to cover both the singular and the plural, unless otherwise indicated herein or clearly contradicted by context. Further, it should further be noted that the terms "first," "second," and the like herein do not denote any order, quantity, or importance, but rather are used to distinguish one element from another. The modifier "about" used in connection with a quantity is inclusive of the stated value and has the meaning dictated by the context (e.g., it includes the degree of error associated with measurement of the particular quantity).

## Claims

1. A center-filled confection, comprising:
a center comprising a center composition; and
a shell comprising a shell composition comprising less than or equal to 20 weight percent total fat, based on the total weight of the shell composition;
wherein the shell contacts and substantially surrounds the center;
wherein the center composition comprises
a bulk sweetener, and
a fat having a slip melting point of 10 to 18°C, and
wherein the center composition has a Brookfield viscosity of 4,000 to 12,000 millipascal-seconds measured at 40°C and 50 rotations per minute using HA/HB spindle 5.

2. The center-filled confection of claim 1, wherein the bulk sweetener is selected from the group consisting of sucrose, glucose, dextrose, dextrin, xylose, fructose, lactose, ribose, maltose, isomaltulose, hydrogenated isomaltulose, mannose, galactose, corn syrup, sorbitol, xylitol, erythritol, isomalt, invert sugar, fructooligosaccharide syrups, partially hydrolyzed starch, hydrogenated starch hydrolysates, sorbitol, xylitol, maltitol, mannitol, galactitol, lactitol, erythritol, and combinations thereof and wherein the fat is selected from the group consisting of non-hydrogenated vegetable fats, hydrogenated vegetable fats, non-hydrogenated animal fats, hydrogenated animal fats, and combinations thereof.

3. The center- filled confection of claim 1, wherein the fat is a non-hydrogenated vegetable fat having a solid fat content less than 5 weight percent at 20°C determined according to AOCS CA-5A-40 comprising 25 to 35 weight percent palmitoleic acid, 40 to 50 weight percent oleic acid, and 5 to 15 weight percent linoleic acid.

4. The center-filled confection of any of claims 1 to 3, wherein the center composition comprises 25 to 40 weight percent total fat content.

5. The center-filled confection of any of claims 1 to 4, wherein the center composition further comprises an emulsifier having a hydrophilic-lipophilic balance (HLB) value of 4 to 11, wherein the emulsifier in the center composition is selected from the group consisting of polyglycerol polyricinoleate, sucrose fatty acid esters, lecithin, lecithin derivatives, and combinations thereof.

6. The center-filled confection of any of claims 1 to 5, wherein the center composition has a Brookfield viscosity of 8,000 to 10,000 millipascal-seconds measured at 40°C and 50 rotations per minute using HA/HB spindle 5.

7. The center-filled confection of any of claims 1 to 6, wherein the center composition of an individually wrapped confection exhibits a viscosity change after storage at 37°C and 80% relative humidity for eight weeks that is less than the viscosity change of a corresponding center-filled confection comprising a fat having a slip melting point greater than 18°C.

8. The center-filled confection of any of claims 1 to 7, wherein the center composition comprises less than or equal to 2 weight percent water.

9. The center-filled confection of any of claims 1 to 8, wherein the center composition comprises at least 5 weight percent lactose.

10. The center-filled confection of any of claims 1 to 9, wherein the center composition comprises at least 0.1 weight percent theobromine.

11. The center-filled confection of any of claims 1 to 10, wherein the shell composition is a caramel shell composition comprising milk solids, vegetable fat, glucose, and sucrose.

12. The center-filled confection of any of claims 1 to 11, wherein the shell composition comprises 5 to 9 weight percent water.

13. The center-filled confection of any of claims 1 to 12, exhibiting
a maximum resistance of 200 to 800 gram force as the shell is penetrated, and
a maximum resistance of 10 to 100 gram force as the center is penetrated, all as measured at 32°C using a 2 millimeter diameter cylindrical probe using a test speed of 2.0 mm/s and a
data aquisition rate of 200 points per second.

14. The center-filled confection of claim 1,
wherein the center composition comprises, based on the total weight of the center composition,
30 to 35 weight percent sucrose, 5 to 15 weight percent lactose,
0.1 to 0.5 weight percent theobromine,
22 to 28 weight percent of a non-hydrogenated vegetable fat having a slip melting point of 10 to 18°C and a solid fat content less than 1 weight percent at 20°C,
0.2 to 0.4 weight percent of polyglycerol polyricinoleate,
0.3 to 0.5 weight percent lecithin,
0.3 to 0.8 weight percent of an emulsifier comprising polyglycerol polyricinoleate and a sucrose fatty acid ester, and
less than or equal to 1.5 weight percent water;
wherein the center composition has a Brookfleld viscosity of 8,000 to 10,000 millipascal-seconds measured at 40°C and 50 rotations per minute using HA/HB spindle 5;
wherein the center composition of an individually wrapped confection exhibits a viscosity change after storage at 37°C and 80% relative humidity for eight weeks that is less than the viscosity change of a corresponding center-filled confection comprising a fat having a slip melting point greater than 18°C;
wherein the shell composition is a caramel shell composition comprising milk solids, vegetable fat, glucose, and sucrose;
wherein the shell composition comprises 7 to 9 weight percent water;
wherein the center-filled confection exhibits
a maximum resistance of 200 to 800 gram force as the shell is penetrated, and
a maximum resistance of 10 to 100 gram force as the center is penetrated, all as measured at 32°C using a 2 millimeter diameter cylindrical prob using a test speed of 2.0 mm/s and a data aquisition rate of 200 points per second; ; and wherein the center-filled confection consists of the center and the shell.

15. A method of making a center-filled confection, comprising:
extruding a center-filled rope comprising
a shell comprising a shell composition and
a center comprising a center composition; and
forming individual pieces from the center-filled rope; wherein, in the individual pieces, the shell contacts and substantially surrounds the center;
wherein the center composition comprises
a bulk sweetener, and
a fat having a slip melting point of 10 to 18°C, and
wherein the center composition has a Brookfield viscosity of 4,000 to 12,000 millipascal-seconds measured at 40°C and 50 rotations per minute using HA/HB spindle 5.

## Patentansprüche

1. In der Mitte gefülltes Konfekt, umfassend:
einen Kern, umfassend eine Kernzusammensetzung; und
eine Hülle, umfassend eine Hüllenzusammensetzung, die weniger als oder gleich 20 Gewichtsprozent Gesamtfett bezogen auf das Gesamtgewicht der Hüllenzusammensetzung umfasst;
wobei die Hülle den Kern berührt und im Wesentlichen umgibt;
wobei die Kernzusammensetzung Folgendes umfasst:
ein körpergebendes Süßungsmittel, und
ein Fett, das einen Fließschmelzpunkt von 10 bis 18°C aufweist, und
wobei die Kernzusammensetzung eine Brookfield-Viskosität von 4.000 bis 12.000 Millipascalsekunden, gemessen bei 40°C und 50 Umdrehungen pro Minute unter Verwendung einer HA/HB-Spindel 5, aufweist.

2. Das in der Mitte gefüllte Konfekt nach Anspruch 1, wobei das körpergebende Süßungsmittel aus der Gruppe ausgewählt ist, die aus Saccharose, Glucose, Dextrose, Dextrin, Xylose, Fructose, Lactose, Ribose, Maltose, Isomaltulose, hydrierter Isomaltulose, Mannose, Galactose, Maissirup, Sorbit, Xylit, Erythrit, Isomalt, Invertzucker, Fructo-Oligosaccharid-Sirupe, teilweise hydrolysierter Stärke, hydrierten Stärkehydrolysaten, Sorbit, Xylit, Maltit, Mannit, Galaktit, Lactit, Erythrit und Kombinationen davon besteht, und wobei das Fett aus der Gruppe ausgewählt ist, die aus nichthydrierten Pflanzenfetten, hydrierten Pflanzenfetten, nichthydrierten tierischen Fetten, hydrierten tierischen Fetten und Kombinationen davon besteht.

3. Das in der Mitte gefüllte Konfekt nach Anspruch 1, wobei das Fett ein nichthydriertes Pflanzenfett mit einem Festfettgehalt von weniger als 5 Gewichtsprozent bei 20°C, bestimmt gemäß AOCS CA-5A-40, ist, das 25 bis 35 Gewichtsprozent Palmitoleinsäure, 40 bis 50 Gewichtsprozent Ölsäure und 5 bis 15 Gewichtsprozent Linolsäure umfasst.

4. Das in der Mitte gefüllte Konfekt nach einem der Ansprüche 1 bis 3, wobei die Kernzusammensetzung 25 bis 40 Gewichtsprozent Gesamtfettgehalt umfasst.

5. Das in der Mitte gefüllte Konfekt nach einem der Ansprüche 1 bis 4, wobei die Kernzusammensetzung ferner einen Emulgator umfasst, der einen Hydrophil-Lipophil-Gleichgewichtswert (HLB-Wert) von 4 bis 11 aufweist, wobei der Emulgator in der Kernzusammensetzung aus der Gruppe ausgewählt ist, die aus Polyglycerin-Polyricinoleat, Saccharosefettsäureestern, Lecithin, Lecithinderivaten und Kombinationen davon besteht.

6. Das in der Mitte gefüllte Konfekt nach einem der Ansprüche 1 bis 5, wobei die Kernzusammensetzung eine Brookfield-Viskosität von 8.000 bis 10.000 Millipascalsekunden, gemessen bei 40°C und 50 Umdrehungen pro Minute unter Verwendung einer HA/HB-Spindel 5, aufweist.

7. Das in der Mitte gefüllte Konfekt nach einem der Ansprüche 1 bis 6, wobei die Kernzusammensetzung eines einzeln verpackten Konfekts nach Lagerung bei 37 C und 80 % relativer Feuchte für acht Wochen eine Viskositätsänderung zeigt, die kleiner ist als die Viskositätsänderung eines entsprechenden in der Mitte gefüllten Konfekts, das ein Fett mit einem Fließschmelzpunkt höher als 18°C umfasst.

8. Das in der Mitte gefüllte Konfekt nach einem der Ansprüche 1 bis 7, wobei die Kernzusammensetzung weniger als oder gleich 2 Gewichtsprozent Wasser umfasst.

9. Das in der Mitte gefüllte Konfekt nach einem der Ansprüche 1 bis 8, wobei die Kernzusammensetzung mindestens 5 Gewichtsprozent Lactose umfasst.

10. Das in der Mitte gefüllte Konfekt nach einem der Ansprüche 1 bis 9, wobei die Kernzusammensetzung mindestens 0,1 Gewichtsprozent Theobromin umfasst.

11. Das in der Mitte gefüllte Konfekt nach einem der Ansprüche 1 bis 10, wobei die Hüllenzusammensetzung eine Karamellhüllenzusammensetzung ist, die Milchtrockenmasse, Pflanzenfett, Glucose und Saccharose umfasst.

12. Das in der Mitte gefüllte Konfekt nach einem der Ansprüche 1 bis 11, wobei die Hüllenzusammensetzung 5 bis 9 Gewichtsprozent Wasser umfasst.

13. Das in der Mitte gefüllte Konfekt nach einem der Ansprüche 1 bis 12, das Folgendes zeigt:
einen maximalen Widerstand von 200 bis 800 Pond, während die Hülle durchdrungen wird, und
einen maximalen Widerstand von 10 bis 100 Pond, während der Kern durchdrungen wird,
alles gemessen bei 32°C unter Verwendung einer zylindrischen Sonde mit einem Durchmesser von 2 Millimetern unter Verwendung einer Prüfgeschwindigkeit von 2,0 mm/s und einer Datenerfassungsrate von 200 Punkten pro Sekunde.

14. Das in der Mitte gefüllte Konfekt nach Anspruch 1,
wobei die Kernzusammensetzung bezogen auf das Gesamtgewicht der Kernzusammensetzung Folgendes umfasst:
30 bis 35 Gewichtsprozent Saccharose, 5 bis 15 Gewichtsprozent Lactose,
0,1 bis 0,5 Gewichtsprozent Theobromin,
22 bis 28 Gewichtsprozent eines nichthydrierten Pflanzenfetts, das einen Fließschmelzpunkt von 10 bis 18°C und einen Festfettgehalt von weniger als 1 Gewichtsprozent bei 20 °C aufweist,
0,2 bis 0,4 Gewichtsprozent Polyglycerin-Polyricinoleat,
0,3 bis 0,5 Gewichtsprozent Lecithin,
0,3 bis 0,8 Gewichtsprozent eines Emulgators, der Polyglycerin-Polyricinoleat und ein Saccharosefettsäureester umfasst, und
weniger als oder gleich 1,5 Gewichtsprozent Wasser;
wobei die Kernzusammensetzung eine Brookfield-Viskosität von 8.000 bis 10.000 Millipascalsekunden, gemessen bei 40°C und 50 Umdrehungen pro Minute unter Verwendung einer HA/HB-Spindel 5, aufweist;
wobei die Kernzusammensetzung eines einzeln verpackten Konfekts nach Lagerung bei 37°C und 80 % relativer Feuchte für acht Wochen eine Viskositätsänderung zeigt, die kleiner ist als die Viskositätsänderung eines entsprechenden in der Mitte gefüllten Konfekts, das ein Fett umfasst, das einen Fließschmelzpunkt höher als 18°C aufweist;
wobei die Hüllenzusammensetzung eine Karamellhüllenzusammensetzung ist, die Milchtrockenmasse, Pflanzenfett, Glucose und Saccharose umfasst;
wobei die Hüllenzusammensetzung 7 bis 9 Gewichtsprozent Wasser umfasst;
wobei das in der Mitte gefüllte Konfekt Folgendes zeigt:
einen maximalen Widerstand von 200 bis 800 Pond, während die Hülle durchdrungen wird, und
einen maximalen Widerstand von 10 bis 100 Pond, während der Kern durchdrungen wird,
alles gemessen bei 32°C unter Verwendung einer zylindrischen Sonde mit einem Durchmesser von 2 Millimetern unter Verwendung einer Prüfgeschwindigkeit von 2,0 mm/s und einer Datenerfassungsrate von 200 Punkten pro Sekunde;
wobei das in der Mitte gefüllte Konfekt aus dem Kern und aus der Hülle besteht.

15. Verfahren zum Herstellen eines in der Mitte gefüllten Konfekts, umfassend:
Herauspressen eines in der Mitte gefüllten Strangs, umfassend:
eine Hülle, die eine Hüllenzusammensetzung umfasst, und
einen Kern, der eine Kernzusammensetzung umfasst; und
Bilden einzelner Stücke aus dem in der Mitte gefüllten Strang; wobei in den einzelnen Stücken die Hülle den Kern berührt und im Wesentlichen umgibt;
wobei die Kernzusammensetzung Folgendes umfasst:
ein körpergebendes Süßungsmittel, und
ein Fett, das einen Fließschmelzpunkt von 10 bis 18°C aufweist, und
wobei die Kernzusammensetzung eine Brookfield-Viskosität von 4.000 bis 12.000 Millipascalsekunden, gemessen bei 40°C und 50 Umdrehungen pro Minute unter Verwendung einer HA/HB-Spindel 5, aufweist.

## Revendications

1. Confiserie à fourrage central, comprenant :
un centre comprenant une composition centrale ; et
une coque comprenant une composition de coque comprenant une quantité inférieure ou égale à 20 pour cent en poids de graisse totale, sur la base du poids total de la composition de coque ;
la coque étant en contact et entourant sensiblement le centre ;
la composition centrale comprenant
un édulcorant de charge, et
une graisse ayant un point d'écoulement de 10 à 18 °C, et la composition centrale ayant une viscosité Brookfield de 4 000 à 12 000 millipascal-seconde mesurée à 40 °C et 50 tours par minute en utilisant un mobile HA/HB 5.

2. Confiserie à fourrage central de la revendication 1, l'édulcorant de charge étant choisi dans le groupe comprenant le saccharose, le glucose, le dextrose, la dextrine, le xylose, le fructose, le lactose, le ribose, le maltose, l'isomaltulose, l'isomaltulose hydrogéné, le mannose, le galactose, le sirop de maïs, le sorbitol, le xylitol, l'érythritol, l'isomalt, le sucre inverti, les sirops de fructooligosaccharide, l'amidon partiellement hydrolysé, des hydrolysats d'amidon hydrogéné, le sorbitol, le xylitol, le maltitol, le mannitol, le galactitol, le lactitol, l'érythritol, et des combinaisons de ceux-ci, et la graisse étant choisie dans le groupe comprenant des graisses végétales non hydrogénées, des graisses végétales hydrogénées, des graisses animales non hydrogénées, des graisses animales hydrogénées, et des combinaisons de celles-ci.

3. Confiserie à fourrage central de la revendication 1, la graisse étant une graisse végétale non hydrogénée ayant une teneur en graisse solide inférieure à 5 pour cent en poids à 20 °C déterminée selon AOCS CA-5A-40 comprenant de 25 à 35 pour cent en poids d'acide palmitoléique, de 40 à 50 pour cent en poids d'acide oléique, et de 5 à 15 pour cent en poids d'acide linoléique.

4. Confiserie à fourrage central de l'une quelconque des revendications 1 à 3, la composition centrale comprenant de 25 à 40 pour cent en poids de teneur en graisse totale.

5. Confiserie à fourrage central de l'une quelconque des revendications 1 à 4, la composition centrale comprenant en outre un émulsifiant ayant une valeur d'équilibre hydrophile-lipophile (HLB) de 4 à 11, l'émulsifiant dans la composition centrale étant choisi dans le groupe comprenant du polyricinoléate de polyglycérol, des esters d'acide gras de saccharose, de la lécithine, des dérivés de lécithine, et des combinaisons de ceux-ci.

6. Confiserie à fourrage central de l'une quelconque des revendications 1 à 5, la composition centrale ayant une viscosité Brookfield de 8 000 à 10 000 millipascal-seconde mesurée à 40 °C et 50 tours par minute en utilisant un mobile HA/HB 5.

7. Confiserie à fourrage central de l'une quelconque des revendications 1 à 6, la composition centrale d'une confiserie individuellement enveloppée présentant un changement de viscosité après stockage à 37 °C et 80 % d'humidité relative pendant huit semaines qui est inférieur au changement de viscosité d'une confiserie à fourrage central correspondante comprenant une graisse ayant un point d'écoulement supérieur à 18 °C.

8. Confiserie à fourrage central de l'une quelconque des revendications 1 à 7, la composition centrale comprenant une quantité inférieure ou égale à 2 pour cent en poids d'eau.

9. Confiserie à fourrage central de l'une quelconque des revendications 1 à 8, la composition centrale comprenant au moins 5 pour cent en poids de lactose.

10. Confiserie à fourrage central de l'une quelconque des revendications 1 à 9, la composition centrale comprenant au moins 0,1 pour cent en poids de théobromine.

11. Confiserie à fourrage central de l'une quelconque des revendications 1 à 10, la composition de coque étant une composition de coque au caramel comprenant de la poudre de lait, de la graisse végétale, du glucose, et du saccharose.

12. Confiserie à fourrage central de l'une quelconque des revendications 1 à 11, la composition de coque comprenant de 5 à 9 pour cent en poids d'eau.

13. Confiserie à fourrage central de l'une quelconque des revendications 1 à 12, présentant
une résistance maximale de 200 à 800 gramme-force lorsque la coque est pénétrée, et
une résistance maximale de 10 à 100 gramme-force lorsque le centre est pénétré,
toutes étant mesurées à 32 °C en utilisant une sonde cylindrique de 2 millimètres de diamètre, en utilisant une vitesse de test de 2,0 mm/s et une fréquence d'acquisition de données de 200 points par seconde.

14. Confiserie à fourrage central de la revendication 1,
la composition centrale comprenant, sur la base du poids total de la composition centrale,
de 30 à 35 pour cent en poids de saccharose,
de 5 à 15 pour cent en poids de lactose,
de 0,1 à 0,5 pour cent en poids de théobromine,
de 22 à 28 pour cent en poids d'une graisse végétale non hydrogénée ayant un point d'écoulement de 10 à 18 °C et une teneur en graisse solide inférieure à 1 pour cent en poids à 20 °C,
de 0,2 à 0,4 pour cent en poids de polyricinoléate de polyglycérol,
de 0,3 à 0,5 pour cent en poids de lécithine,
de 0,3 à 0,8 pour cent en poids d'un émulsifiant comprenant du polyricinoléate de polyglycérol et un ester d'acide gras de saccharose, et
une quantité inférieure ou égale à 1,5 pour cent en poids d'eau ;
la composition centrale ayant une viscosité Brookfield de 8 000 à 10 000 millipascal-seconde mesurée à 40 °C et 50 tours par minute en utilisant un mobile HA/HB 5 ;
la composition centrale d'une confiserie individuellement enveloppée présentant un changement de viscosité après stockage à 37 °C et 80 % d'humidité relative pendant huit semaines qui est inférieur au changement de viscosité d'une confiserie à fourrage central correspondante comprenant une graisse ayant un point d'écoulement supérieur à 18 °C ;
la composition de coque étant une composition de coque au caramel comprenant de la poudre de lait, de la graisse végétale, du glucose, et du saccharose ;
la composition de coque comprenant de 7 à 9 pour cent en poids d'eau ;
la confiserie à fourrage central présentant
une résistance maximale de 200 à 800 gramme-force lorsque la coque est pénétrée,
et
une résistance maximale de 10 à 100 gramme-force lorsque le centre est pénétré, toutes étant mesurées à 32 °C en utilisant une sonde cylindrique de 2 millimètres de diamètre, en utilisant une vitesse de test de 2,0 mm/s et une fréquence d'acquisition de données de 200 points par seconde ;
la confiserie à fourrage central étant composée du centre et de la coque.

15. Procédé de fabrication d'une confiserie à fourrage central, comprenant :
l'extrusion d'un cordon de fourrage central comprenant
une coque comprenant une composition de coque et
un centre comprenant une composition centrale ; et
la formation de pièces individuelles à partir du cordon de fourrage central ; où, dans les pièces individuelles, la coque est en contact et entoure sensiblement le centre ;
la composition centrale comprenant
un édulcorant de charge, et
une graisse ayant un point d'écoulement de 10 à 18 °C, et
la composition centrale ayant une viscosité Brookfield de 4 000 à 12 000 millipascal-seconde mesurée à 40 °C et 50 tours par minute en utilisant un mobile HA/HB 5.
